# FASCICULE DE BREVET EUROPEEN

(11) **EP 2 020 595 B1**
(45) Date de publication et mention de la délivrance du brevet: **08.01.2020**
(21) Numéro de dépôt: 08160818.4
(22) Date de dépôt: 21.07.2008
(51) Int. Cl.: G01N 21/53, B60Q 1/20

(54) **Procédé de détection par un véhicule d'un phénomène perturbateur de visibilité**
Erfassungsverfahren eines Fahrzeugs für ein Störphänomen der Sicht
Method for a vehicle to detect a phenomenon affecting visibility

(30) Priorité: 03.08.2007 FR 0705715
(43) Date de publication de la demande: 04.02.2009
(73) Titulaire: VALEO VISION, 93012 Bobigny (FR)
(72) Inventeur: Robert, Caroline, 75011 Paris (FR); Leleve, Joël, 93800 Epinay sur Seine (FR); Hue, David, 78400 Chatou (FR)
(74) Mandataire: Claassen, Maarten Pieter

(56) Documents cités:
- EP-A- 1 298 481
- EP-A- 1 498 721
- EP-A- 1 553 429
- EP-A- 1 715 456
- EP-A- 1 790 541
- FR-A- 2 847 367
- REILHAC PATRICE ET AL: "OPTIVEO: A VISION-BASED SENSING PLATFORM FOR DRIVING ASSISTANCE" SAE WORLD CONGRESS, XX, XX, 2006, pages 229-235, XP008069594
- LELEVE J ET AL: "FOG LAMP AUTOMATION WITH VISIBILITY SENSOR THE NEXT STEP OF LIGHTING AUTOMATION" VDI BERICHTE, DUESSELDORF, DE, no. 1907, 2005, pages 151-160, XP008061020 ISSN: 0083-5560

## Description

### Domaine de l'invention

La présente invention concerne un procédé de détection d'un phénomène perturbateur de visibilité, et un dispositif de détection permettant de mettre en oeuvre ledit procédé.

Elle trouve une application particulière dans le domaine des véhicules automobiles.

### État de la technique

Dans le cas d'une application à un véhicule automobile, des procédés de détection d'un obstacle solide tel qu'un véhicule suiveur se trouvant derrière le véhicule sont connus de l'état de la technique et permettent par exemple de prévenir si le véhicule suiveur se rapproche trop. Ils utilisent pour cela par exemple un capteur de recul. S'il existe un tel obstacle et que les feux arrières sont allumés, en cas de route mouillée (qu'il pleuve ou non), la visibilité des feux peut se trouver altérée par un phénomène perturbateur de visibilité tel qu'une gerbe d'eau générée par les roues arrières du véhicule, pour le conducteur du véhicule suiveur, ce qui peut engendrer une certaine insécurité pour ledit conducteur suiveur et pour ledit conducteur suivi. De tels procédés ne permettent pas de détecter de tel phénomène perturbateur de visibilité.

On connaît déjà de tels dispositifs de détection. Par exemple le document EP 1 715 456 décrit un procédé de détection de brouillard nocturne dans une scène de route à l'avant du véhicule, comportant les opérations d'éclairage de la scène de route par les projecteurs du véhicule, d'acquisition de plusieurs images successives de la scène de route, d'extraction dans ces images du halo lumineux créé par les projecteurs, d'approximation de la forme de ce halo, de comparaison avec la courbe elliptique la plus approchante, et de déduction de la présence ou de l'absence de brouillard.

Le document EP 1 498 721 décrit un procédé de détection du brouillard, comportant une caméra numérique détectant l'environnement autour du véhicule, et un système de traitement d'image qui compare la luminosité de chaque pixel de la caméra avec une valeur prédéterminée minimale et déduit la présence de brouillard si aucun des pixels n'a de luminosité inférieure à la valeur prédéterminée.

Le document EP 1 298 481 décrit un dispositif de vision nocturne, comportant un émetteur infrarouge, un détecteur et un dispositif d'affichage. L'émetteur comporte une ou plusieurs diodes émettant des impulsions, en étant commandées par un driver qui pilote simultanément le détecteur ou une caméra. Ce document ne traite pas du brouillard.

Le document EP 1 553 429 décrit un système de détection de conditions de circulation sur une route (conditions météorologiques ou détection d'obstacles), monté sur un véhicule automobile, comportant au moins un projecteur lumineux comprenant une première source lumineuse émettant un faisceau lumineux visible et au moins une source de lumière modulable, notamment à haute fréquence, émettant un faisceau lumineux infrarouge en direction d'une scène de route, et au moins une caméra de prise d'images de la scène de route.

Le document « Fog lamp automation with visibility sensor, the next step of lighting automation », de J. Lelevé et al., paru dans VDI Berichte N° 1907, 2005, décrit un système passif de détection de brouillard, à base de caméras et de traitement d'images, qui ne comporte pas d'émission de faisceau lumineux.

Le document OptiVeo : A Vision-Based Platform for Driving Assistance de P. Reilhac et al., du SAE World Congress, 2006, décrit un système passif de détection de brouillard, à base de caméras et de traitement d'images, qui ne comporte pas d'émission de faisceau lumineux.

Le document EP 1 790 541 décrit un dispositif de détection des salissures sur un pare-brise de véhicule automobile, à l'aide de deux caméras et d'un système de traitement d'images.

Le document FR 2 847 367 décrit un procédé et un dispositif passifs de détermination de la distance de visibilité en présence d'un élément perturbant la visibilité tel que le brouillard, qui ne comporte pas d'émission de faisceau lumineux.

### Objet de l'invention

La présente invention a pour but la détection d'un phénomène perturbateur de visibilité.

Selon un premier objet de l'invention, ce but est atteint par un procédé de détection d'un phénomène perturbateur de visibilité selon la revendication 1, comportant les étapes :
- d'émettre un faisceau lumineux à partir d'un véhicule, le faisceau lumineux étant émis dans le champ de vision d'une caméra du véhicule ; et
- de déterminer la présence et la nature du phénomène perturbateur de visibilité à partir d'au moins une image acquise par la caméra.

Comme on va le voir en détail par la suite, un tel procédé présente l'avantage d'effectuer une analyse d'un phénomène perturbateur de visibilité au moyen d'une image captée par une caméra vidéo. Aucun dispositif électronique complexe n'est nécessaire. De plus, l'utilisation d'une caméra vidéo n'est pas très coûteuse.

Le procédé selon la revendication 1 présente en outre les caractéristiques suivantes :
- La détermination de la nature du phénomène perturbateur de visibilité se fait en fonction de l'homogénéité et de la granulométrie du phénomène perturbateur de visibilité sur l'image. Ces deux critères permettent de déterminer si le phénomène perturbateur de visibilité est du brouillard ou une gerbe d'eau par exemple.

Selon des modes de réalisation non limitatifs, le procédé présente en outre les caractéristiques suivantes:
- La détermination de la nature du phénomène perturbateur de visibilité se fait en fonction d'un suivi de mouvement dudit phénomène perturbateur. Cela permet de différencier de façon précise du brouillard d'une gerbe d'eau.
- Le faisceau lumineux est modulé. Cela permet d'avoir une caméra multifonctions comprenant la fonction de détection d'un phénomène perturbateur de visibilité et une autre fonction telle que l'aide au parking.

Selon un deuxième objet de l'invention, elle concerne un dispositif de détection d'un phénomène perturbateur de visibilité selon la revendication 4, comportant :
- une source lumineuse émettrice d'un faisceau lumineux à partir d'un véhicule, le faisceau lumineux étant émis dans le champ de vision d'une caméra du véhicule ; et
- une unité de contrôle pour déterminer la présence et la nature d'un phénomène perturbateur de visibilité à partir d'au moins une image acquise par la caméra,
caractérisé en ce que l'unité de contrôle détermine la nature du phénomène perturbateur en fonction de l'homogénéité et de la granulométrie du phénomène perturbateur de visibilité sur l'image.

Selon un troisième objet de l'invention, elle concerne un produit programme d'ordinateur selon la revendication 5 omportant une ou plusieurs séquences d'instructions exécutables par une unité de traitement d'information, l'exécution desdites séquences d'instructions permettant une mise en œuvre du procédé selon l'une quelconque des caractéristiques précédentes.

### Brève description des figures

D'autres caractéristiques et avantages de la présente invention seront mieux compris à l'aide de la description et des dessins non limitatifs parmi lesquels :
- la Fig. 1 représente un diagramme d'un mode de réalisation non limitatif du procédé de détection selon l'invention ;
- la Fig. 2 est une représentation schématique d'un véhicule générant un phénomène perturbateur de visibilité détecté par le procédé selon la Fig. 1 ;
- la Fig. 3 est une vue de dessus de la Fig. 2 ;
- la Fig. 4 est un premier exemple d'une image acquise d'un phénomène perturbateur de visibilité détecté par le procédé de la Fig 1 ;
- la Fig. 5 est un deuxième exemple d'une image acquise d'un phénomène perturbateur de visibilité détecté par le procédé de la Fig 1 ; et
- la Fig. 6 est un schéma d'un mode de réalisation non limitatif d'un dispositif de détection permettant la mise en oeuvre du procédé de la Fig. 1.

### Description détaillée de modes de réalisation non limitatifs de l'invention

Sur route mouillée, par temps de pluie ou par temps de brouillard, la vision des feux arrières d'un véhicule automobile (voiture, camion, etc.) par un conducteur suiveur est altérée par un phénomène perturbateur pour la visibilité d'un autre véhicule automobile tel que par exemple une gerbe d'eau projetée à l'arrière du véhicule. Il est donc intéressant d'évaluer la présence et la nature du phénomène perturbateur de visibilité pour, si nécessaire, allumer et/ou augmenter le niveau lumineux d'un système d'éclairage et de signalisation (feux/projecteur) du véhicule et permettre au conducteur suiveur de distinguer plus facilement la signalisation du véhicule qui le précède.

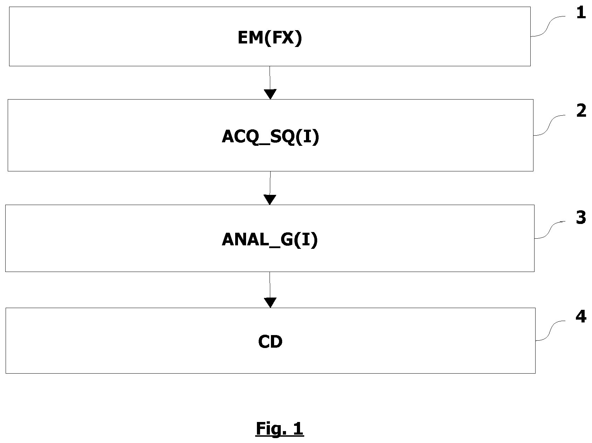

Le procédé de détection d'un phénomène perturbateur de visibilité selon l'invention permet une telle détection et est décrit dans un mode de réalisation non limitatif à la Fig. 1.

Dans cette application, la détection se fait à partir d'un dispositif de détection embarqué dans un véhicule V comprenant une caméra vidéo décrite plus loin.

Le procédé de détection comporte les étapes suivantes telles qu'illustrées à la Fig 1 :
- émettre un faisceau lumineux FX à partir d'un véhicule V, le faisceau lumineux étant émis dans le champ de vision de la caméra CAM du véhicule V (étape EM(FX) sur la Fig.1) ; et
- déterminer la présence et la nature d'un phénomène perturbateur G à partir d'au moins une image I acquise par la caméra CAM (étape ANAL_G(I) sur la Fig.1).

Il comporte en outre une étape de :
- capter une image I par la caméra CAM (étape ACQ_SQ(I) sur la Fig.1).

Les étapes sont décrites en détail ci-après.

**Dans une première étape 1),** on émet un faisceau lumineux FX à partir dudit véhicule V, le faisceau lumineux étant émis dans le champ de vision de la caméra CAM du véhicule V.

Dans un mode de réalisation non limitatif, le faisceau FX est un faisceau infrarouge proche de longueur d'onde 850 nm. Cela évite de créer des effets lumineux intempestifs sur l'arrière du véhicule en présence d'un phénomène perturbateur G, et de gêner ainsi les conducteurs suiveurs. De plus, cela permet d'être compatible avec le spectre de détection de la camera CAM comme on va le voir plus loin.

Par ailleurs, dans un mode de réalisation non limitatif, le faisceau FX est étroit. Dans un exemple non limitatif, il comporte une ouverture de 4°. Cela permet de ne pas avoir de perte de puissance. On a ainsi une concentration de l'énergie dans le faisceau lumineux FX et une détection d'un phénomène perturbateur à des distances plus grandes.

La génération du faisceau lumineux FX est effectuée par une source lumineuse DIOD décrite plus loin.

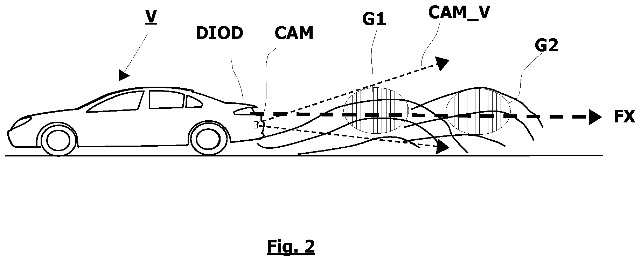

La Fig. 2 montre un exemple de faisceau lumineux FX généré par une source lumineuse DIOD et émis dans le champ de vision CAM_V de la caméra CAM du véhicule V. dans l'exemple illustré, le faisceau lumineux FX est émis à l'arrière du véhicule V. Par ailleurs deux gerbes d'eau G1 et G2 sont représentées et sont éclairées par le faisceau lumineux FX.

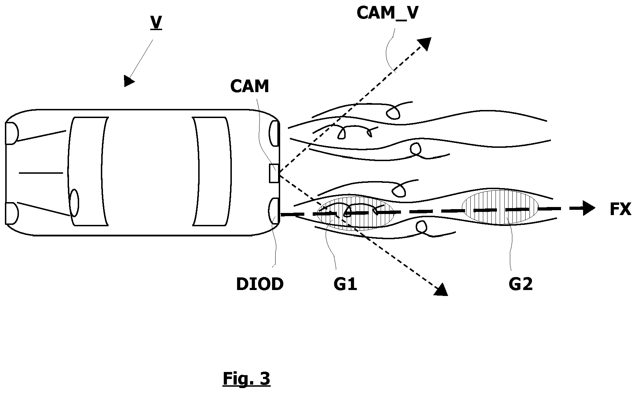

La Fig. 3 montre une vue de dessus de la Fig. 2. On peut voir l'emplacement de la source lumineuse DIOD dans un feu arrière et l'emplacement de la caméra CAM entre les deux feux arrière.

Dans un mode de réalisation non limitatif, la génération du faisceau lumineux FX se fait dès le déclenchement des feux arrière. Il fonctionne ainsi en permanence dès l'allumage de ces feux. Cela permet d'être sûr de pouvoir détecter un phénomène perturbateur tel qu'une gerbe d'eau dès qu'il pleut ou que la chaussée est mouillée et d'adapter l'éclairage des feux arrières en conséquence selon la nature du phénomène perturbateur.

**Dans une deuxième étape 2),** on acquiert une image I par la caméra du véhicule V.

La caméra vidéo CAM étant placée, dans l'exemple pris, à l'arrière du véhicule V, l'image acquise I correspond à l'environnement du véhicule V se trouvant dans le champ de la caméra CAM et donc à l'arrière du véhicule V. On va donc détecter un phénomène perturbateur G se trouvant à l'arrière du véhicule V. Dans un exemple non limitatif, la caméra CAM est placée près d'un des feux arrière du véhicule V.

Ainsi, la lumière issue du faisceau lumineux FX émis depuis un des feux arrière est diffusée en présence de particules du phénomène perturbateur G en suspension dans l'atmosphère (après le passage des roues sur une surface mouillée par exemple). La longueur d'onde de ce faisceau lumineux étant compatible avec le spectre d'analyse de la camera CAM, et les particules constitutives du phénomène perturbateur G se situant dans le champ de vision de la camera CAM, il est alors possible de capter une image intégrant la lumière diffusée dans le phénomène perturbateur G.

On notera que cette étape d'acquisition d'images peut ne pas être compris dans le procédé décrit, mais peut faire partie d'un autre procédé exécuté en amont du procédé décrit.

On notera également que la première et la deuxième étape peuvent être effectuées en parallèle.

**Dans une troisième étape 3),** on détermine la présence et la nature d'un phénomène perturbateur de visibilité G à partir de l'image I acquise par la caméra CAM.

L'analyse de cette image I va ainsi permettre :
- d'évaluer la présence et la nature du phénomène perturbateur (pluie, brouillard) et d'en déduire l'atténuation de visibilité de la signalisation arrière ou de l'éclairage avant pour ensuite la compenser en augmentant l'intensité des feux concernés ou projecteurs concernés (dans l'exemple où le faisceau éclaire à l'arrière du véhicule, feux de position) ou en allumant les feux de brouillard, ou en commutant des projecteurs de code aux projecteurs de route ; et
- de déceler la présence d'un obstacle O et notamment d'un véhicule suiveur pour optimiser la consommation d'énergie supplémentaire apportée aux feux (et limiter les incidences sur la durée de vie des lampes à filament).

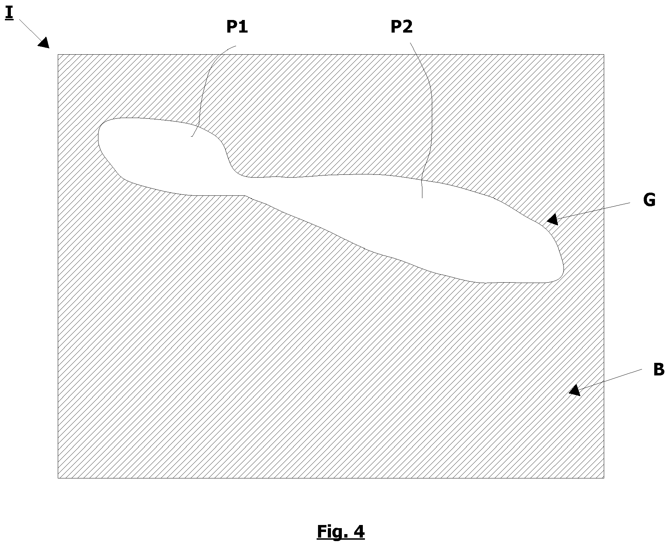

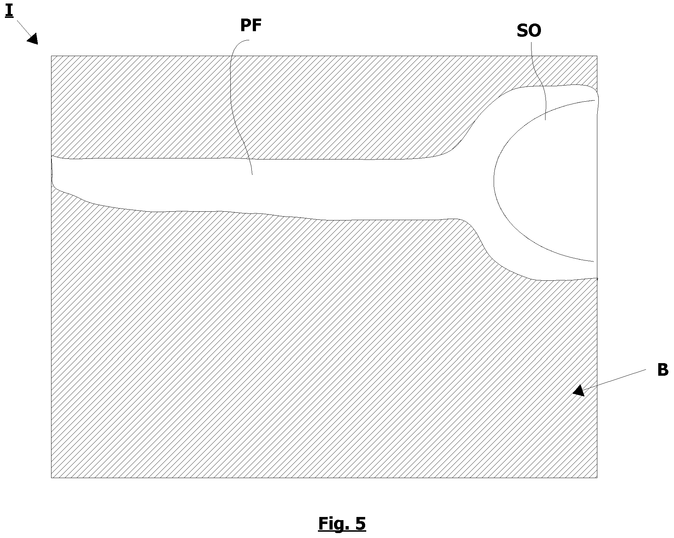

Deux exemples non limitatifs d'une image I acquise par la caméra CAM sont représentés sur les Fig. 4 et Fig. 5.

Ces images I donnent un aperçu de la lumière diffusée de nuit avec un faisceau lumineux FX étroit. Le faisceau est issu d'une source lumineuse DIOD placée sur la gauche de l'image I et au dessus de la camera CAM.

La partie blanche représente la lumière diffusée de nuit avec le faisceau lumineux FX, tandis que la partie hachurée notée B représente l'environnement, ici à l'arrière, du véhicule V dans le champ de la caméra CAM non éclairé par le faisceau lumineux FX.

L'exemple de la Fig. 4 représente l'environnement à l'arrière du véhicule V en présence de pluie, sans obstacle O dans le champ CAM_V de la caméra CAM, l'image I faisant apparaître des paquets d'eau P1 et P2 révélateurs de la présence d'un phénomène perturbateur G, tel qu'une gerbe d'eau, causé par les turbulences aérodynamique derrière le véhicule V.

L'exemple de la Fig. 5 représente l'environnement à l'arrière du véhicule V en présence de brouillard, avec un obstacle O (tel qu'un véhicule suiveur).

En présence de brouillard PF, plus homogène et moins perturbé qu'en présence de paquets d'eau, le faisceau FX apparaît plus continu. Sur cette même image, une source lumineuse extérieure SO apparaît dans le champ, à droite de l'image I. Il peut s'agir d'un obstacle O tel qu'un projecteur d'un véhicule suiveur ou tel qu'une source fixe dans le paysage. La détection et la caractérisation de ce type de source lumineuse dans l'image est aisée, en utilisant par exemple des méthodes de suivis d'objets d'image (« tracking » en anglais) basées par exemple sur la détection d'ombres pour mettre en évidence les contours d'un véhicule suiveur. Ces méthodes étant bien connues de l'homme du métier, elles ne sont pas décrites ici.

Ainsi, grâce aux images acquises par la caméra CAM, on peut détecter :
- la présence et la nature d'un obstacle O ;
- la présence et la nature d'un phénomène perturbateur.

En ce qui concerne la détection d'un obstacle O, l'information de présence de véhicule suiveur peut-être utilisée pour une gestion optimale de l'intensité des fonctions de signalisation. Ainsi, on peut régler l'intensité des feux arrière en fonction de la présence ou non d'un véhicule suiveur proche (pour ne pas être éblouissant). Cela permet ainsi d'avoir plus de sécurité pour le conducteur du véhicule suiveur et le conducteur du véhicule suivi.

On notera qu'à l'arrière du véhicule l'intensité des feux de positions par exemple est caractérisée en plusieurs points de norme. Selon une norme européenne (ECE R7), l'intensité de ces points varie de 0.05cd à 4cd minimum suivant les points. Le maximum permis est lui de 12cd pour un feu simple, de 17cd pour un ensemble de feux. Ainsi, si l'on détecte de l'eau alors on augmente l'intensité des feux, mais si on détecte de l'eau et la présence d'un véhicule suiveur proche on augmente l'intensité des feux en conséquence (c'est-à-dire moins qu'en l'absence de ce véhicule pour ne pas être éblouissant et moins qu'en présence d'un véhicule éloigné).

En ce qui concerne la détection d'un phénomène perturbateur de visibilité G, la caractérisation de la nature du phénomène perturbateur repose sur l'homogénéité et la granulométrie de la lumière diffusée. Grâce à ces deux paramètres, on peut ainsi discriminer l'eau et le brouillard.

L'intérêt de discriminer l'eau et le brouillard est de pouvoir activer une signalisation particulière en cas de présence de brouillard, c'est-à-dire les feux de brouillard, d'augmenter l'intensité des feux arrières en cas de présence d'une gerbe d'eau par exemple etc.

On notera que dans le cas où l'on voudrait déterminer si on est en présence d'une gerbe d'eau et de la pluie, on peut utiliser un capteur de pluie en complément. Ce capteur permettra de confirmer qu'il pleut également.

La détermination de l'homogénéité de la lumière diffusée est connue de l'homme du métier. Dans un exemple non limitatif, on peut utiliser des méthodes d'analyse de texture telles que les matrices de cooccurrences et plus particulièrement son critère d'homogénéité. Cette méthode étant bien connue de l'homme du métier, elle n'est donc pas décrite en détail ici.

La détermination de la granulométrie (attribut de la texture) de la lumière diffusée est également connue de l'homme du métier. Elle peut dans un exemple non limitatif être basée sur une analyse de la texture d'une image I en utilisant des approches probabilistes telles que les matrices de cooccurrence et/ou des approches fréquentielles telles que la transformée de Fourier, la décomposition en ondelettes ...etc. Ces méthodes étant connues de l'homme du métier, elles ne sont donc pas décrites en détail ici.

Ainsi, si sur l'image acquise I, il n'existe ni phénomène perturbateur G, ni obstacle O, on ne voit pas le faisceau FX sur l'image. Si sur l'image acquise I, il n'existe pas de phénomène perturbateur G mais qu'il existe un obstacle O, l'obstacle est éclairé et caractérisable facilement.

Si sur l'image acquise I, il existe un phénomène perturbateur G mais qu'il n'existe pas d'obstacle O, le phénomène perturbateur G est éclairé et visible.

Si sur l'image acquise I, il existe un phénomène perturbateur G et qu'il existe un obstacle O, le phénomène perturbateur G est éclairé et visible ainsi que l'obstacle O.

En cas de présence d'un phénomène perturbateur G, si sur l'image acquise I, le faisceau lumineux FX fait apparaître des zones non homogènes et dont la texture (donnée par la granulométrie) est non lisse, on conclue en la présence de paquets d'eau (cas d'une chaussée mouillée avec ou sans pluie). A ce moment, l'intensité des feux peut être augmenté.

Si sur l'image acquise I, le faisceau lumineux FX fait apparaître une zone continue homogène et dont la texture (donnée par la granulométrie) est plus lisse, on pourrait conclure en la présence de brouillard (à moins que l'on soit en présence de pluie fine sans génération de gerbe d'eau). A ce moment les feux de brouillard peuvent être allumés.

Dans un mode de réalisation non limitatif, on peut également faire un suivi de mouvement du phénomène perturbateur G sur une séquence SQ d'images acquises I afin d'aider également à la caractérisation de la nature du phénomène. Ainsi, dans le cas d'un phénomène perturbateur G tel que du brouillard, aucun mouvement ne sera détecté sur la séquence SQ d'images acquises I, tandis que dans le cas d'un phénomène perturbateur tel que de l'eau, un mouvement sera détecté. Ce suivi de mouvement se base sur un suivi («tracking») des zones éclairées sur la séquence SQ d'images I. Un tel suivi de mouvement étant connu de l'homme d métier, il n'est pas décrit ici.

Ce suivi de mouvement est particulièrement utile pour discriminer le brouillard de l'eau, lorsqu'il n'existe pas de gerbe d'eau générée (en cas de pluie fine par exemple) ou lorsque le véhicule roule à basse vitesse. L'image acquise I présente en effet une zone continue homogène.

**Dans une quatrième étape 4),** après qu'un phénomène perturbateur de visibilité G est détecté et sa nature définie, un traitement adéquate CD en temps réel sur le véhicule V peut être exécuté.

Dans des exemples non limitatifs, il peut s'agir :
- d'adapter automatiquement l'éclairage des feux du véhicule V en fonction des indications sur la nature du phénomène perturbateur G en augmentant l'intensité des feux ou en allumant les feux de brouillard. En complément on prendra en compte la présence d'obstacle O tel que vu précédemment ; ou
- d'envoyer un signal d'alerte au conducteur du véhicule V de manière à ce qu'il augmente lui-même l'intensité des feux par exemple s'il peut le faire pour éclairer plus ou qu'il allume lui-même les feux de brouillard ; ou
- d'allumer automatiquement les feux (dans l'exemple pris, les feux arrière de signalisation, c'est-à-dire les veilleuses et/ou feux de brouillard).

On notera que cette quatrième étape se fait au fur et à mesure du traitement des images vidéo par le procédé décrit ci-dessus. Ainsi, le traitement adéquat CD, tel que par exemple l'adaptation automatique de l'éclairage des feux arrières, est exécuté en temps réel puisqu'il est effectué après chaque détection d'un phénomène perturbateur, une détection étant effectuée à chaque acquisition d'image I.

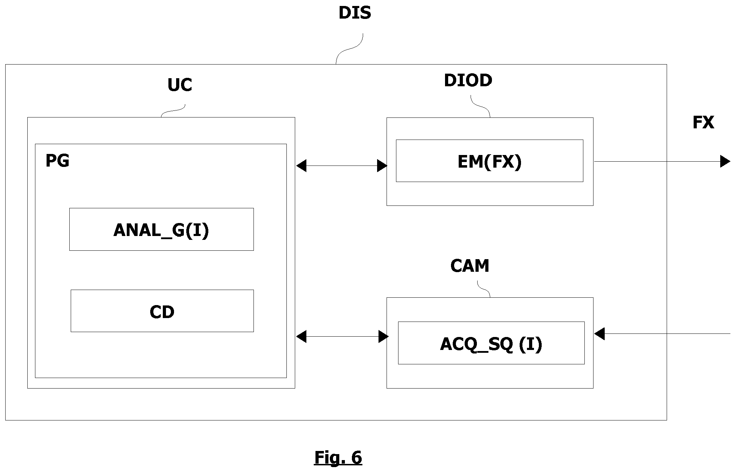

Le procédé de l'invention est mis en oeuvre par un dispositif DISP de détection représenté à la Fig. 6.

Ce dispositif DISP comporte notamment :
- une source lumineuse émettrice DIOD d'un faisceau lumineux FX à partir d'un véhicule V, le faisceau lumineux étant émis dans le champ de vision d'une caméra CAM du véhicule V ; et
- une unité de contrôle UC pour de déterminer la présence et la nature d'un phénomène perturbateur de visibilité G à partir d'au moins une image I acquise par la caméra CAM.

L'unité de contrôle UC permet en outre de commander la source lumineuse DIOD et la caméra CAM et de commander (adaptation automatique de l'éclairage des feux, allumage automatique des feux) ou d'effectuer (envoi d'un signal d'alerte) le traitement adéquat CD.

Dans un mode de réalisation non limitatif, le dispositif de détection DISP peut en outre comporter la caméra vidéo CAM permettant d'acquérir une image I telle qu'illustrée à la Fig. 6. On notera que dans ce cas, l'unité de contrôle UC peut également se trouver dans la caméra vidéo CAM.

La source lumineuse DIOD et la caméra CAM sont décrites plus en détail ci-après.

### La source lumineuse DIOD.

La source lumineuse DIOD est une diode de type LED. Dans d'autres modes non limitatifs, on peut avoir des diodes laser, OLED, lampe halogène avec concentrateur de lumière, etc., toute source capable d'émettre un faisceau compatible avec la caméra CAM comme on va le voir ci-après.

Dans un exemple non limitatif, elle est placée dans un système d'éclairage et de signalisation du véhicule (dans l'exemple pris un feu arrière du véhicule V, en raison de la protection procurée par la glace du feu), ou sur le véhicule dans la région de l'éclairage de la plaque de police par exemple ou du haillon etc., ces endroits permettant d'évaluer la présence d'un phénomène perturbateur G, par exemple généré par une des roues arrières. En effet, de par sa taille (de l'ordre du cm³), un générateur de faisceau lumineux, composé de la source lumineuse DIOD infrarouge plus d'un système de projection optique, est facile à intégrer dans le système d'éclairage et de signalisation du véhicule, dans l'exemple pris un feu arrière. Par ailleurs, une électronique de commande (pilotage de la source lumineuse DIOD et de la caméra CAM) peut se placer dans la partie arrière d'un feu, qui présente souvent des volumes disponibles.

### La caméra CAM

Cette caméra est par exemple du type VGA de définition 640*480 (soit une image acquise I de 8 bits (par pixel) et de 640 colonnes et 480 lignes) et comporte une lentille (non représentée) à cet effet. L'image I ainsi acquise est en pleine résolution.

Dans un exemple non limitatif, la caméra vidéo CAM acquiert 10 images par seconde. On notera qu'une séquence d'images SQ comprend entre vingt images et une centaine d'images par seconde selon la vitesse à laquelle roule le véhicule V.

Bien entendu, une caméra de type différent et avec une résolution différente peut être utilisée.

On notera que la caméra CAM étant utilisée pour la détection de présence d'un phénomène perturbateur G, elle doit être sensible à la longueur d'onde utilisée pour le faisceau lumineux FX. On utilisera ainsi dans un exemple non limitatif, des caméras type CMOS ou CCD classiquement utilisée dans les applications automobiles car elles sont à base de silicium et ont une réponse spectrale de 400 nm à 1100 nm environ (plage de longueurs d'onde que voit la caméra). Cette réponse spectrale est donc compatible avec un faisceau FX infrarouge. Ainsi, le faisceau lumineux FX sera vu par la caméra CAM car il a une longueur d'onde (infrarouge ici) compris dans la plage de longueurs d'onde à laquelle est sensible la caméra CAM.

Par ailleurs, le champ CAM_V de la caméra CAM coupe le faisceau lumineux FX assez proche (entre 1 et 5 mètres) de la source lumineuse émettrice DIOD du faisceau lumineux FX. Cela permet d'obtenir des informations précises concernant les phénomènes perturbateurs G se situant, dans l'exemple pris à l'arrière du véhicule, et ainsi d'être sûr de détecter la présence d'un phénomène et notamment d'une gerbe d'eau. De plus, la portée du champ CAM_V de la caméra est déterminée de sorte à couvrir une zone où peut être généré (cas d'une gerbe d'eau) un phénomène perturbateur G. Dans un exemple non limitatif, elle est de l'ordre de 20 mètres.

On notera que toutes les étapes du procédé décrit ci-dessus sont effectuées pour une ou plusieurs (séquence SQ) images acquises I par la caméra vidéo CAM et ce en temps réel. C'est-à-dire que l'ensemble des étapes ne prend pas plus de 1/10 seconde dans l'exemple d'une séquence de 10 images par seconde acquises par la caméra CAM.

On notera que la mise en œuvre du procédé de détection exposé ci-dessus peut être effectuée au moyen d'un dispositif micro programmé « software », d'une logique câblée ou de composants électroniques « hardware ».

Ainsi, le dispositif de détection DISP peut comporter un produit programme d'ordinateur PG comportant une ou plusieurs séquences d'instructions exécutables par une unité de traitement d'information telle qu'un microprocesseur, ou d'une unité de traitement d'un microcontrôleur, d'un ASIC, d'un ordinateur etc., l'exécution desdites séquences d'instructions permettant une mise en œuvre du procédé décrit.

Un tel programme d'ordinateur PG peut être inscrit en mémoire non volatile inscriptible de type ROM ou en mémoire non volatile réinscriptible de type EEPROM ou FLASH. Ledit programme d'ordinateur PG peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.

Dans l'exemple non limitatif de la Fig. 6, le programme d'ordinateur PG est inscrit dans une mémoire de l'unité de contrôle UC du dispositif DISP.

Bien entendu, la description du procédé n'est pas limitée aux modes de réalisation et exemples décrits ci-dessus. Ainsi, dans un mode de réalisation non limitatif, le faisceau lumineux FX émis peut être modulé. Par exemple, on peut en effet envisager d'émettre la lumière toutes les "n" images captées par la camera CAM et de procéder à des comparaisons ou des soustractions (opérations simples en traitement d'image) entre les images avec et sans lumière modulée. Grâce à ces comparaisons/soustractions, il est facile de discriminer ainsi le faisceau lumineux FX de manière à étudier les phénomènes perturbateurs G rendus visibles comme décrit précédemment. Dans la mesure où n est grand (par exemple afficher 29 images sans lumière modulée et la 30ème modulée sur un système captant 30 images/seconde) il est possible de superposer la fonction "détection de phénomène perturbateur" à une autre fonction telle qu'une fonction d'aide au parking, sans altérer la fonction détection de phénomène perturbateur.

Bien entendu, ce qui a été décrit précédemment pour l'exemple d'un faisceau lumineux FX émis pour éclairer à l'arrière d'un véhicule et pour détecter un phénomène perturbateur de visibilité à l'arrière du véhicule V s'applique également pour un faisceau lumineux FX pour éclairer à l'avant du véhicule V et pour détecter un phénomène perturbateur de visibilité à l'avant du véhicule V. A ce moment, le véhicule V est muni d'une caméra CAM située à l'avant.

Dans ce cas, après la détection d'un phénomène perturbateur de visibilité G à l'avant du véhicule V, dans des exemples non limitatifs, le traitement adéquate CD suivant en temps réel sur le véhicule V peut être exécuté :
- adapter automatiquement l'intensité des projecteurs avants du véhicule V en fonction des indications sur la nature du phénomène perturbateur G en augmentant l'intensité des projecteurs (code ou route) et/ou en allumant les feux de brouillard. En complément on prendra en compte la présence d'obstacle O tel que vu précédemment ; ou
- commuter automatiquement des projecteurs de code aux projecteurs de route ; ou
- envoyer un signal d'alerte au conducteur du véhicule V de manière à ce qu'il augmente lui-même l'intensité des projecteurs avants par exemple s'il peut le faire pour éclairer plus ou qu'il allume lui-même les feux de brouillard.

De plus, on peut prévoir que le traitement adéquate CD comprend en outre également une transmission de l'information de détection à d'autres systèmes du véhicule V, tel que par exemple une caméra avant qui fait un suivi de lignes blanches de la route. Cela permet de prévenir cette caméra que la route est mouillée et le cas échéant d'augmenter l'intensité des projecteurs pour mieux visualiser les lignes blanches de la route.

Ainsi, l'invention présente notamment les avantages suivants :
- Elle permet de détecter la présence d'une gerbe d'eau de manière à adapter les feux arrière de façon adéquate ;
- Elle permet de déterminer la nature d'un phénomène perturbateur. Ainsi, en cas de brouillard, les feux anti-brouillard sont allumés, tandis qu'en cas de gerbe d'eau, l'intensité des feux arrière est adaptée ;
- Elle permet ainsi de détecter un phénomène perturbateur de visibilité qui peut être généré par les roues arrière d'un véhicule, tel qu'une gerbe d'eau. Elle peut faire la différence entre une gerbe d'eau (phénomène généré par le véhicule) et du brouillard (phénomène non généré par le véhicule) ;
- Elle permet de déterminer la présence d'un obstacle tel qu'un véhicule suiveur et sa nature :
- Dans le cas où il n'existe pas d'obstacle, le niveau des feux arrières est augmenté (s'il y a détection d'un phénomène perturbateur) ;
- Dans le cas où il existe un obstacle, le niveau des feux est augmenté de façon adaptée de sorte que le véhicule suiveur ne soit pas ébloui ou puisse voir correctement le véhicule devant lui. Cela permet également de consommer moins et donc d'économiser de l'énergie ;
- Elle permet de ne pas confondre un phénomène perturbateur avec un obstacle tel qu'un véhicule suiveur ;
- Elle permet d'éviter d'utiliser deux caméras, une pour la fonction de détection d'un phénomène perturbateur et une pour la fonction d'aide au parking. On regroupe ainsi deux fonctions dans une seule caméra qui est multifonctions. C'est une invention économique car le surcoût de la fonction détection d'un phénomène perturbateur se limite au générateur de lumière et au traitement d'image, ce dernier pouvant utiliser le même support hardware que celui de l'aide au parking ; et
- Elle est facilement intégrable dans un système d'éclairage et de signalisation tel qu'un feu ou un projecteur (générateur de lumière, caméra) sans implantation contraignante sur la carrosserie d'un véhicule.

## Revendications

1. Procédé de détection d'un phénomène perturbateur de visibilité (G) comportant les étapes :
- d'émettre un faisceau lumineux (FX) à partir d'un véhicule (V), le faisceau lumineux étant émis dans le champ de vision d'une caméra (CAM) du véhicule (V) ; et
- de déterminer la présence et la nature d'un phénomène perturbateur de visibilité (G) à partir d'au moins une image (I) acquise par la caméra (CAM)
**caractérisé en ce que** la détermination de la nature du phénomène perturbateur de visibilité (G) se fait en fonction de l'homogénéité et de la granulométrie du phénomène perturbateur de visibilité (G) sur l'image (I).

2. Procédé de détection selon l'une des revendications précédentes, **caractérisé en ce que** la détermination de la nature du phénomène perturbateur de visibilité (G) se fait en fonction d'un suivi de mouvement dudit phénomène perturbateur (G).

3. Procédé de détection selon l'une des revendications précédentes, **caractérisé en ce que** le faisceau lumineux (FX) est modulé.

4. Dispositif (DISP) de détection d'un phénomène perturbateur de visibilité (G) comportant :
- une source lumineuse émettrice (DIOD) d'un faisceau lumineux (FX) à partir d'un véhicule (V), le faisceau lumineux étant émis dans le champ de vision d'une caméra (CAM) du véhicule (V) ; et
- une unité de contrôle (UC) pour déterminer la présence et la nature d'un phénomène perturbateur de visibilité (G) à partir d'au moins une image (I) acquise par la caméra (CAM),
**caractérisé en ce que** l'unité de contrôle (UC) détermine la nature du phénomène perturbateur de visibilité (G) en fonction de l'homogénéité et de la granulométrie du phénomène perturbateur de visibilité (G) sur l'image (I).

5. Produit programme (PG) d'ordinateur comportant une ou plusieurs séquences d'instructions exécutables par une unité de traitement d'information, l'exécution desdites séquences d'instructions, **caractérisé en ce qu'**il permet une mise en œuvre du procédé selon l'une quelconque des revendications précédentes 1 à 3.

## Patentansprüche

1. Erfassungsverfahren eines Störphänomens der Sicht (G), umfassend die folgenden Schritte:
- Ausgeben eines Lichtstrahls (FX) aus einem Fahrzeug (V), wobei der Lichtstrahl im Sichtfeld einer Kamera (CAM) des Fahrzeugs (V) ausgegeben wird; und
- Bestimmen des Vorhandenseins und der Art eines Störphänomens der Sicht (G) aus mindestens einem von der Kamera (CAM) aufgenommenen Bild (I),
**dadurch gekennzeichnet, dass** die Bestimmung der Art des Störphänomens der Sicht (G) in Abhängigkeit von der Homogenität und Granulometrie des Störphänomens der Sicht (G) auf dem Bild (I) erfolgt.

2. Erfassungsverfahren nach einem der vorhergehenden Ansprüche, **dadurch gekennzeichnet, dass** die Bestimmung der Art des Störphänomens der Sicht (G) in Abhängigkeit von einer Bewegungsüberwachung des Störphänomens (G) erfolgt.

3. Erfassungsverfahren nach einem der vorhergehenden Ansprüche, **dadurch gekennzeichnet, dass** der Lichtstrahl (FX) moduliert ist.

4. Erfassungsvorrichtung (DISP) eines Störphänomens der Sicht (G), umfassend:
- eine Lichtquelle (DIOD), die einen Lichtstrahl (FX) aus einem Fahrzeug (V) ausgibt, wobei der Lichtstrahl im Sichtfeld einer Kamera (CAM) des Fahrzeugs (V) ausgegeben wird; und
- eine Steuereinheit (UC) zum Bestimmen des Vorhandenseins und der Art eines Störphänomens der Sicht (G) aus mindestens einem von der Kamera (CAM) aufgenommenen Bild (I), **dadurch gekennzeichnet, dass** die Steuereinheit (UC) die Art des Störphänomens der Sicht (G) in Abhängigkeit von der Homogenität und Granulometrie des Störphänomens der Sicht (G) auf dem Bild (I) bestimmt.

5. Computerprogrammprodukt (PG), umfassend eine oder mehrere Sequenzen von Anweisungen, die von einer Informationsverarbeitungseinheit ausgeführt werden können, die Ausführung der Sequenzen von Anweisungen, **dadurch gekennzeichnet ist, dass** sie die Umsetzung des Verfahrens nach einem der vorhergehenden Ansprüche 1 bis 3 ermöglicht.

## Claims

1. Method for detecting a visibility-disrupting effect (G), comprising the following steps:
- emitting a light beam (FX) from a vehicle (V), the light beam being emitted in the field of view of a camera (CAM) of the vehicle (V); and
- determining the presence and the nature of a visibility-disrupting effect (G) from at least one image (I) acquired by the camera (CAM)
**characterized in that** the nature of the visibility-disrupting effect (G) is determined depending on the uniformity and on the granulometry of the visibility-disrupting effect (G) in the image (I).

2. Detecting method according to one of the preceding claims, **characterized in that** the nature of the visibility-disrupting effect (G) is determined depending on a tracked movement of said disrupting effect (G).

3. Detecting method according to one of the preceding claims, **characterized in that** the light beam (FX) is modulated.

4. Device (DISP) for detecting a visibility-disrupting effect (G), comprising:
- a light source (DIOD) for emitting a light beam (FX) from a vehicle (V), the light beam being emitted in the field of view of a camera (CAM) of the vehicle (V); and
- a control unit (UC) for determining the presence and the nature of a visibility-disrupting effect (G) from at least one image (I) acquired by the camera (CAM),
**characterized in that** the control unit (UC) determines the nature of the visibility-disrupting effect (G) depending on the uniformity and on the granulometry of the visibility-disrupting effect (G) in the image (I).

5. Computer-program product (PG) comprising one or more sequences of instructions that that are executable by an information-processing unit, the execution of said sequences of instructions, **characterized in that** it allows the method according to any one of Claims 1 to 3 above to be implemented.
